# Europäisches Patentamt
# European Patent Office
# Office européen des brevets

(11) Publication number: **0 040 464**
**B1**

## EUROPEAN PATENT SPECIFICATION

(45) Date of publication of patent specification: **23.05.84**

(21) Application number: **81300868.7**

(22) Date of filing: **03.03.81**

(51) Int. Cl.³: **G 11 B 15/60, G 01 L 7/18**

(54) **A fluid bearing.**

(30) Priority: **19.05.80 US 151496**

(43) Date of publication of application:
**25.11.81 Bulletin 81/47**

(45) Publication of the grant of the patent:
**23.05.84 Bulletin 84/21**

(84) Designated Contracting States:
**DE FR GB**

(56) References cited:
**DE-B-1 129 745**
**DE-B-1 241 642**
**US-A-3 602 412**
**US-A-3 845 434**
**US-A-3 868 851**

(73) Proprietor: **Computer Peripherals Inc.**
**8100 34th Avenue South**
**Minneapolis Minnesota (US)**

(72) Inventor: **Jewitt, James Wilfred**
**564 Saratoga Road**
**King of Prussia Pennsylvania 19407 (US)**
Inventor: **Johnston, Ross William**
**1717 Pulaski Drive**
**Norristown Pennsylvania 19407 (US)**
Inventor: **Platter, Sanford**
**Sugarloaf Star Route**
**Boulder Colorado 80302 (US)**

(74) Representative: **Caro, William Egerton et al**
**J. MILLER & CO. Lincoln House 296-302 High**
**Holborn**
**London WC1V 7JH (GB)**

Courier Press, Leamington Spa, England.

## Description

This invention relates to a fluid bearing according to the pra-characterising part of claim 1.

It is well known to provide air bearing for supporting a flexible magnetic tape in a magnetic tape unit, for example, of the type used with a computer. Such bearings ordinarily supply pressure from an internal cavity within the bearing through metered orifices to the external surface of the bearing where it is trapped between the periphery of the bearing and the tape trained around the bearing. It can be shown that the pressure of fluid trapped within the region between the tape and the bearing surface is directly proportional to the tension in the tape.

Previous attempts have been made to utilise the pressure of fluid trapped within the region between the tape and the bearing surface to sense or determine the tension in the tape, but such attempts have not been altogether successful. It is known, for example, to employ a pressure sensor in direct communication with the region between the tape and the bearing surface to sense the pressure in that region, and hence the tension in the tape. However, in the event of complete collapse of the tape (such as if extremely high tension in the tape causes the tape to contact the sensor), the tape closes the orifice of the sensor so that the sensor senses no pressure, a condition usually associated with little or no tension in the tape. As a result, control apparatus controlled by the sensor attempts further to increase the tension in the tape, often causing damage to the tape. In U.S. Patent Specification No. 3 845 434 a resilient fluid bearing is utilised which will collapse upon increase in tape tension, or pressure between the tape and the bearing surface. Seemingly, the known arrangement described in this U.S. patent specification would not encounter the same false reading as might occur in the previously described known arrangement, but in reality the degree of deformation of the sensor is not sufficient to give accurate readings over a wide range of tension, nor is it immune from the difficulties arising from high tension in the tape.

German Specification No. 1 241 642 discloses a known sensing device for controlling the tension of a travelling web or tape. However, this device only senses when the tension in the tape reaches a predetermined level. The present invention, on the other hand, seeks to provide a tension sensing device which can sense continuous variation of tension in a tape.

For solving this problem there is provided a fluid bearing comprising a plurality of orifices in fluid communication between a source of pressurized fluid within the fluid bearing and the periphery of said fluid bearing to form a fluid cushion to support a flexible tape under tension and a tension sensor having a chamber within the fluid bearing, sensing means for providing an indication of the pressure in the chamber and thus of the tension in the tape, which according to the invention is characterised in that the tension sensor has a first metered orifice in fluid communication between said chamber and the fluid cushion and a second metered orifice providing fluid communication between said chamber and said source of pressurized fluid so that the pressure within the chamber is a function of the pressure of the fluid cushion which is a function of the tension of the tape.

Preferably the fluid bearing includes a grounding slot in the periphery of the fluid bearing surrounding said first orifice, said grounding slot being open to the atmosphere to isolate said first orifice from said plurality of orifices.

Flanges may be provided extending from the periphery of said fluid bearing to guide the tape.

The invention is illustrated, merely by way of example, in the accompanying drawings, in which:—

Figure 1 is a sectional view of a portion of a fluid bearing according to the present invention having a tension sensor;

Figure 2 is a partial top view of the fluid bearing illustrated in Figure 1;

Figure 3 is a sectional view taken along the line 3—3 in Figure 2; and

Figure 4 is a schematic representation of a pneumatic circuit of the fluid bearing illustrated in Figure 1.

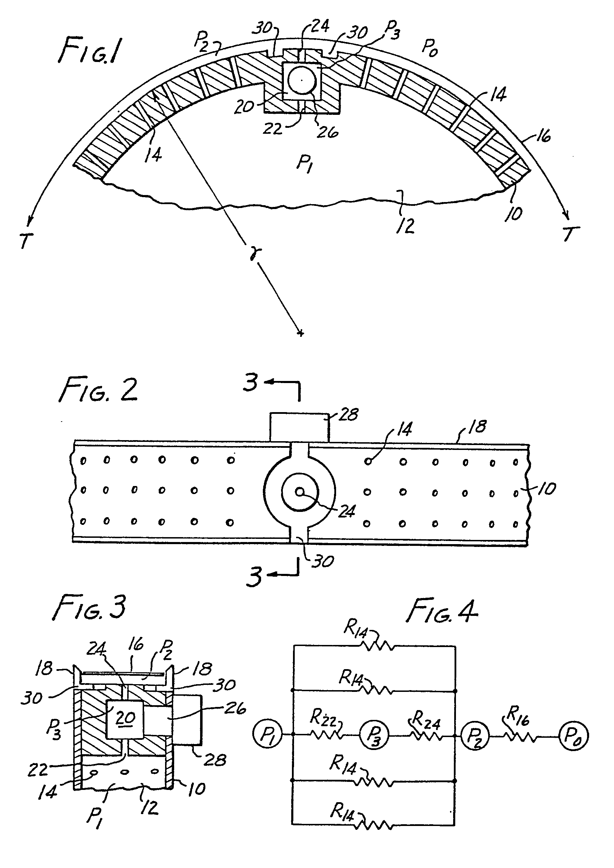

Referring to the drawings, and particularly to Figures 1 to 3, there is illustrated a fluid bearing 10 according to the present invention. The fluid bearing 10 includes a chamber 12 containing fluid, such as air, at pressure P1. A plurality of orifices 14 provide metered fluid communication between the chamber 12 and an external peripheral surface of the fluid bearing 10 thereby to provide fluid at a pressure P2 to support a magnetic tape 16. The tape 16 is under tension T and is trained around the periphery of the bearing to be supported thereby. Conveniently, and as shown particularly in Figures 2 and 3, flanges 18 may extend upwardly from the peripheral surface of the fluid bearing 10 to guide the tape 16 and to enclose completely the region between the tape 16 and the peripheral surface of the fluid bearing containing the fluid under pressure P2.

A cavity 20 is in fluid communication with the chamber 12 through a metered orifice 22 and is in fluid communication with the peripheral surface of the fluid bearing 10 through a metered orifice 24. The cavity 20 is also in fluid communication through an opening 26 with a pressure transducer 28 which may be connected to a suitable control mechanism (not shown) to control the speed of a motor or motors controlling the supply and take-up reels of a magnetic tape unit, for example, a tape transport thereby to control the tension of the tape.

If desired, a grounding slot 30 may be provided surrounding the metered orifice 24 to isolate it and the pressure sensor from the direct effects of pressure beneath the tape from the orifices 14.

The operation of the tension sensor will be explained with reference to Figure 4. Figure 4 is based on the assumption that no grounding slot 30 is provided. Fluid pressure P1 within the chamber 12 flows through the orifices 14 to create a fluid cushion having the fluid pressure P2 in the region between the tape 16 and the peripheral surface of the fluid bearing. Thus a pressure drop, schematically represented by a flow resistance R14, is translated in parallel through the orifices 14. A further pressure drop to atmospheric pressure P0 occurs across the edges of the tape 16 and is schematically represented by a flow resistance R16. In parallel with the orifices 14 is the orifice 22 in series with the metered orifice 24 between the cavity 20 and the peripheral surface of the fluid bearing: these are represented by flow resistances R22 and R24 respectively in Figure 4. Since the flow resistance of the orifices 22, 24 are known, the pressure P3 in the cavity 20 is a known fraction of the difference between the pressures P1 and P2. Since the pressure P1 is known from the supply of pressurised fluid to the chamber 12, the pressure P3 in the cavity 20 is a function of the pressure P2 supporting the tape.

It can be shown that the tension T of the tape 16 is directly proportion to the pressure P2 supporting the tape and the radius $r$ of the fluid bearing 10 and is given by the following relationship:

$$T \alpha \mu . P2 \qquad (1)$$

It can be shown that:

$$P2 = \frac{P3 \cdot (R22+R24)-P1 \cdot R24}{R22} \qquad (2)$$

Therefore, the tension T in the tape is given by the relationship:

$$T \alpha r \cdot \frac{P3 \cdot (R22+R24)-P1 \cdot R24}{R22} \qquad (3)$$

Since pressure P1 and P3 can be determined by measurement and the resistances R22, R24 and the radius $r$ are known from the geometry of the fluid bearing, the tension T in the tape may be determined from for example, suitable look-up tables or by means of a microprocessor.

In the event that the tension in the tape increases to such an amount as to close completely the orifices 14, 24, the pressure transducer 28 will not cease to sense the tension in the tape. Instead, the pressure within the cavity 20 will rise to pressure P1 by virtue of the fluid communication through the orifice 22 thereby to indicate a maximum pressure on the pressure sensor and to indicate to the control mechanism that there is an exceedingly high tension in the tape. Consequently, unlike known tension sensors, the tension sensor illustrated in the drawings will not give a false reading upon closure of the orifices 14, 24.

The tension sensor illustrated in the drawings thus is simple and reliable in operation and inexpensive to incorporate in a tape transport.

**Claims**

1. A fluid bearing comprising a plurality of orifices (14) in fluid communication between a source (12) of pressurized fluid within the fluid bearing and the periphery of said fluid bearing to form a fluid cushion to support a flexible tape (16) under tension and a tension sensor having a chamber (20) within the fluid bearing, sensing means (28) for providing an indication of the pressure (P3) in the chamber and thus of the tension in the tape, characterised in that the tension sensor has a first metered orifice (24) in fluid communication between said chamber and the fluid cushion and a second metered orifice (22) providing fluid communication between said chamber and said source of pressurised fluid so that the pressure (P3) within the chamber is a function of the pressure (P2) of the fluid cushion which is a function of the tension (T) of the tape.

2. A fluid bearing as claimed in claim 1 characterised by including a grounding slot (30) in the periphery of the fluid bearing (10) surrounding said first orifice (24), said grounding slot being open to the atmosphere to isolate said first orifice from said plurality of orifices.

3. A fluid bearing as claimed in claim 1 or 2 characterised by flanges (18) extending from the periphery of said fluid bearing to guide the tape (16).

**Patentansprüche**

1. Strömungsmittel-Lager mit einer Vielzahl von Öffnungen (14), die in Strömungsmittel-verbindung zwischen einer Druckströmungs-mittelquelle (12) in dem Strömungsmittel-Lager und dem Umfang des Strömungsmittel-Lagers stehen, um eine Strömungsmittelkissen zur Lagerung eines unter Zugspannung stehenden flexiblen Bandes (16) zu bilden, und mit einem Zugspannungsmeßfühler, der eine in dem Strömungsmittel-Lager angeordnete Kammer (20) und Meßeinrichtungen (28) zur Lieferung einer Anzeige des Druckes (P3) in der Kammer und damit der Zugspannung in dem Band aufweist, dadurch gekennzeichnet, daß der Zugs-pannungsmeßfühler eine erste Dosielröff-nung (24), die in Strömungsmittelverbindung zwischen der Kammer und dem Strömungsmittelkissen steht, und eine zweite Dosieröffnung (22) aufweist, die eine Strömungsmittelverbindung zwischen der Kammer und der Druckströmungsmittelquelle bildet, so daß der Druck (P3) in der Kammer eine Funktion des Druckes (P2) des Strömungsmittelkissens ist, der eine Funktion der Zugspannung (T) des Bandes ist.

2. Strömungsmittel-Lager nach Anspruch 1, gekennzeichnet durch einen im Umfang des Strömungsmittel-Lagers (10) angeordneten und die erste Öffnung (24) umgebenden Erdnungsschlitz (30), der zur Atmosphäre hin offen ist, um die erste Öffnung gegenüber der Vielzahl von Öffnungen zu isolieren.

3. Strömungsmittel-Lager nach Anspruch 1 oder, 2, gekennzeichnet durch Flansche (18), die sich vom Umfang des Strömungsmittel-Lagers aus erstrecken, um das Band (16) zu führen.

**Revendications**

1 Un palier à fluide comprenant une pluralité d'orifices (14) en communication de fluide entre une source (12) de fluide pressurisé dans le palier à fluide et la périphérie dudit palier à fluide afin de former un coussin de fluide pour supporter une bande flexible (16) sous tension et un capteur de tension ayant une chambre (20) dans le palier à fluide, des moyens de détection (28) pour donnen une indication de la pression (P3) dans la chambre et ainsi de la tension dans la bande, caractérisé en ce que le capteur de tension a un premier orifice calibré (24) en communication de fluide entre ladite chambre et le coussin de fluide et un second orifice calibré (22) assurant une communication de fluide entre ladite chambre et ladite source de fluide pressurisé, de sortie que la pression (P3) dans la chambre est une fonction de la pression (P2) du coussin de fluide qui est une fonction de la tension (T) de la bande.

2. Un palier à fluide tel que revendiqué dans la revendication 1, caractérisé par le fait qu'il comprend une rainure de talonnement (30) dans la périphérie du palier à fluide (10) et entourant ledit premier orifice (24), ladite rainure de talonnement étant ouverte à l'atmosphère afin d'isoler ledit premier orifice de ladite pluralité d'orifices.

3. Un palier à fluide tel que revendiqué dans la revendication 1 ou 2, caractérisé par des flasques (18) s'étendant de la périphérie dudit palier à fluide afin de guider la bande (16).

0 040 464

Fig.1

Fig. 2

Fig.3

Fig.4

1